# EUROPÄISCHE PATENTSCHRIFT

(11) **EP 2 971 829 B1**
(45) Veröffentlichungstag und Bekanntmachung des Hinweises auf die Patenterteilung: **04.01.2017**
(21) Anmeldenummer: 14722091.7
(22) Anmeldetag: 05.03.2014
(51) Int. Cl.: F16D 13/64

(54) **KUPPLUNGSEINRICHTUNG**
CLUTCH SYSTEM
DISPOSITIF D'EMBRAYAGE

(30) Priorität: 15.03.2013 DE 102013204599; 15.08.2013 DE 102013216247
(43) Veröffentlichungstag der Anmeldung: 20.01.2016
(73) Patentinhaber: Schaeffler Technologies AG & Co. KG, 91074 Herzogenaurach (DE)
(72) Erfinder: CHAMBRION, Martin, F-Geispolsheim (FR)
(86) Internationale Anmeldenummer: PCT/DE2014/200112
(87) Internationale Veröffentlichungsnummer: WO 2014/139528

(56) Entgegenhaltungen:
- DE-A1-102010 004 295
- DE-A1-102012 211 166

## Beschreibung

Die Erfindung betrifft eine Kupplungseinrichtung mit den Merkmalen des Anspruch 1.

Kupplungseinrichtungen, insbesondere Lamellenkupplungen für Kraftfahrzeuge, bestehen in der Regel aus einem inneren und einem äußeren Träger, die koaxial auf einer Getriebehauptwelle angeordnet sind. Mit dem äußeren Träger steht eine Anzahl erster Reibpartner und mit dem inneren Träger eine Anzahl zweiter Reibpartner in Eingriff, wobei die ersten und zweiten Reibpartner koaxial in alternierender Reihenfolge angeordnet sind. Ein Kraftschluss zwischen dem inneren Träger und dem äußeren Träger kann selektiv hergestellt werden, indem der Stapel aus ersten und zweiten Reibpartner axial zusammengepresst wird.

Fahrzeugdrehmomente eines Antriebsmotors, insbesondere die von Motorrädern, sind in den letzten Jahren immer weiter angestiegen. Aus diesem Grund nehmen auch die Betätigungskräfte von Kupplungen immer weiter zu. Daraus ergibt sich die Notwendigkeit, mit geeigneten Maßnahmen den Komfort für den Fahrer bzw. die Fahrerin durch eine niedrige Kupplungshandkraft zu steigern. Gleichzeitig führen die oben genannten hohen übertragbaren Momente der Kupplung zu dem Sicherheitsproblem, dass das Hinterrad im Schubbetrieb zu stempeln beginnen kann, welches den vollständigen Verlust der Haftung oder Traktion mit sich bringen kann, wenn beispielsweise auf hohe Drehzahl zurückgeschaltet wird. Der Verlust der Haftung des Hinterrades, besonders in Schräglage bei der Kurvenfahrt, macht das Motorrad instabil bis hin zur Unkontrollierbarkeit. Im schlimmsten Falle führt das seitliche Wegrutschen des Hinterrades zum Sturz des Fahrers.

Eine sogenannte Anti-Hopping-Kupplung verhindert dieses Rückwirken der Motorbremse auf das Hinterrad und ermöglicht damit im normalen Straßenverkehr mehr Sicherheit. So kann beispielsweise durch den Einsatz einer sogenannten Booster-Kupplung das Stempeln des Hinterrads beim Herunterschalten vermieden werden. Dieses Kupplungssystem weist eine Vorsteuerkupplung und eine Hauptkupplung auf. Hierbei sind beide Elemente durch ein Rampensystem über Wälzkörper miteinander verbunden, so dass die Betätigung der Hauptkupplung von dem Zustand des Antriebsstrangs (Zug oder Schubbetrieb) bedingt ist. Beim Schließen der Vorsteuerkupplung werden durch das aufgebaute Moment die Rampen des Rampensystems verdreht und so die Hauptkupplung geschlossen. Die für die Betätigung der Hauptkupplung erforderliche Energie wird bei diesem System vom Motor geliefert und es muss von außen nur die Kraft zum Schließen der Vorsteuerkupplung aufgebracht werden.

Ferner sind aus dem Stand der Technik Kupplungseinrichtungen bekannt, bei der die Vorsteuerkupplung und die Hauptkupplung nicht getrennt sind, sondern der Träger mit der Nabe durch eine Schrägführung (Schraubenkinematik) verbunden ist. Diese Schrägführung sowohl die Übertragung des Drehmomentes als auch die Übertragung der axialen Kräfte. Auf diese Weise kann das übertragene Drehmoment verwendet werden, um eine zusätzliche axiale Kraft zu erzeugen, welche die Spannfedern unterstützt. Als Nachteilig erweist sich hierbei, dass eine derartige Ausführung der Kupplungseinrichtung zusätzliche Teile benötigt, wodurch sich die Herstellkosten erhöhen.

Gattungsgemässe Kupplungseinrichtungen sind aus der DE 10 2010 004295 und uas der DE 10 2012 211166 A1 bekannt.

Aufgabe der vorliegenden Erfindung ist es, die oben genannten Nachteile zu verringern. Hierbei soll die Kupplungseinrichtung möglichst einfach und kostengünstig in ihrer Herstellung und Montage sein.

Diese Aufgabe wird durch eine Kupplungseinrichtung mit den Merkmalen des Anspruchs 1 gelöst. Bevorzugte Weiterbildungen sind in den abhängigen Ansprüchen angegeben.

Zur Lösung dieser Aufgabe wird eine Kupplungseinrichtung zur Übertragung eines axialen Drehmoments um eine Drehachse zwischen einem inneren Träger einer Abtriebsseite und einem äußeren Träger einer Antriebsseite vorgeschlagen. Die Kupplungseinrichtung weist zumindest einen drehmomentenschlüssig mit dem inneren Träger verbundenen ersten Reibpartner, zumindest einen drehmomentenschlüssig mit dem äußeren Träger verbundenen zweiten Reibpartner und zumindest einen drehmomentenschlüssig mit dem inneren Träger verbundenen dritten Reibpartner auf, wobei die Reibpartner durch eine Anpresskraft derart in Reibeingriff bringbar sind, um das Drehmoment zwischen der Antriebsseite und der Abtriebsseite zu übertragen. Dabei sind zumindest zwei Reibpartner derart über wenigstens ein erstes Verbindungselement miteinander verbunden sind, dass eine erste Verdrehung der zwei gekoppelten Reibpartner in einer ersten Drehrichtung eine erste translatorische Bewegung der gekoppelten Reibpartner in Richtung der Drehachse generiert. Auf diese Weise kann eine Relativverdrehung (Schraubebewegung) im Kupplungskern erzeugt werden, die eine zusätzliche Anpresskraft generiert. Die beiden gekoppelten Reibpartner können sich somit gegeneinander über das Verbindungselement verdrehen. Diese Besonderheit verursacht bei Belastung eine axiale Kraft, welche die Kupplungsscheiben mit einer konstanten Spannung der Kupplungsfedern zusammenpresst, was unter anderem zusätzlich zur Folge hat, dass bei dieser Kupplungseinrichtung Federn mit geringerer Federrate verwendet werden können, wodurch sich deutlich die maximale Hebelkraft am Kupplungshebel reduziert. Beim Abbremsen des Motorrades hingegen wirkt ein entgegengesetztes Drehmoment, d.h. die axialen Kräfte wirken in entgegengesetzter Richtung und das bremsende Hinterrad erzeugt eine Kraft, die auch auf die Verbindung des zweiteiligen Kupplungskernes wirkt. Ist diese Kraft so groß, dass das entlastete Hinterrad, auch beim schnellen Runterschalten, zum Blockieren neigt, trennt der geteilte Kupplungskern über die Rampenschrägen der Verbindungselemente kurzfristig den Kraftschluss der Reibpartner (durch die Längenänderung), so dass ein plötzliches Blockieren des Hinterrades sinnvoll verhindert wird und die Fahrstabilität des Motorrades und die Sicherheit des Fahrers erhalten bleibt. Auf diese Weise kann die Kupplungseinrichtung anhand einer sehr einfachen Konstruktion eine Reduzierung der Ausrückkraft und eine Begrenzung des Schubmomentes bewirken, wodurch das Stempeln des Hinterrades im Schubbetrieb reduziert bzw. verhindert werden und eine erhöhte Sicherheit des Fahrers gewährleistet werden kann. Durch ihre Einfachheit ist die Kupplungseinrichtung vorzugsweise billig, flexibel und zuverlässig.

In einem weiteren Ausführungsbeispiel ist der zweite Reibpartner zwischen dem ersten Reibpartner und dem dritten Reibpartner in einer axialen Richtung verschiebbar angeordnet. Dabei ist es von Vorteil, wenn der erste Reibpartner über das wenigstens eine erste Verbindungselement mit dem dritten Reibpartner mit demselben Träger, entweder mit dem inneren Träger oder mit dem äußeren Träger, verbunden sind, wobei eine Verdrehung des dritten Reibpartners und des ersten Reibpartners in die erste Drehrichtung die erste translatorische Bewegung des dritten Reibpartners und des ersten Reibpartners in Richtung der Drehachse generiert.

Vorteilhafterweise wird die Verbindung zwischen dem ersten Reibpartner und dem dritten Reibpartner über wenigstens ein Verbindungselement mit einer zungenähnliche Struktur hergestellt, so dass von den Reibpartner selbst ein Schraubebewegung erzeugt wird. Eine Schrägführung der Verbindungselemente erlaubt eine Anpresskraftverstärkung im Zugbetrieb und eine Anpresskraftreduzierung im Schubbetrieb. Dabei ist es möglich, dass nicht alle Verbindungselemente zwischen Reibpartner, die auf dem inneren Träger angeordnet sind eine Schrägführung aufweisen, so dass das Prinzip der Anpresskraftverstärkung mittels miteinander verbundener Reibpartner zwar umgesetzt wird, aber die ursprüngliche Ausgestaltung der Kupplungseinrichtung konventionell gehalten werden kann. Ferner ist auch eine Geradverzahnung der Reibpartner über die Verbindungselemente denkbar, wobei generell koaxial alternierend die Reibpartner des inneren Trägers und die Reibpartner des äußeren Trägers über die Verbindungselemente miteinander verbunden sind. In einem weiteren Ausführungsbeispiel ist das wenigstens eine erste Verbindungselement derart zwischen dem ersten Reibpartner und dem dritten Reibpartner angeordnet, dass das erste Verbindungselement eine zweite Verdrehung in einer zweiten, der ersten entgegengesetzten Drehrichtung eine translatorische Bewegung des ersten Reibpartners und des dritten Reibpartners verhindert.

In einem weiteren Ausführungsbeispiel ist ein vierter Reibpartner zwischen dem dritten Reibpartner und einem fünften Reibpartner in der axialen Richtung verschiebbar angeordnet, wobei der vierte Reibpartner über wenigstens ein zweites Verbindungselement derart mit dem zweiten Reibpartner gekoppelt ist, dass eine Verdrehung des vierten Reibpartners und des zweiten Reibpartners in die erste Drehrichtung eine erste translatorische Bewegung des vierten Reibpartners und des zweiten Reibpartners generiert.

In einer weiteren Ausführungsform kann die Verbindung der Reibpartner dabei derart ausgeführt sein, dass eine zweite Verdrehung in einer zweiten, der ersten entgegengesetzten Drehrichtung eine zweite translatorische Bewegung der jeweils verbundenen Reibpartner generiert. Wobei insbesondere vorgesehen ist, dass die erste translatorische Bewegung und die zweite translatorische Bewegung in die gleiche Richtung weisen. Dabei kann das wenigstens eine zweite Verbindungselement aber auch derart zwischen dem vierten Reibpartner und dem zweiten Reibpartner angeordnet sein, dass das zweite Verbindungselement eine zweite Verdrehung in einer zweiten, der ersten entgegengesetzten Drehrichtung eine translatorische Bewegung des zweiten Reibpartners und des vierten Reibpartners verhindert.

Dabei ist es von Vorteil, dass das erste Verbindungselement eine sich im Wesentlichen entlang der Drehachse erstreckende zungenähnliche Struktur aufweist, die wiederum wenigstens einen in Umfangsrichtung parallel zur Drehachse verlaufenden ersten Rand aufweist. Dabei weist die zungenähnliche Struktur auch einen zweiten Rand auf, wobei der erste Rand und/oder der zweite Rand derart gegenüber der Drehachse geneigt sind, dass die Ränder eine erste Rampenschräge und/oder eine zweite Rampenschräge ausbilden können. Auf diese Weise weist jede Seite der Verbindungselemente der Reibpartner des inneren Trägers eine Rampenschräge auf, die wiederum entweder dem Zugbetrieb oder dem Schubbetrieb entspricht, so dass die Anpresskraftreduzierung sowohl im Schub und im Zug als auch nur im Zug zu generieren ist. Dabei ist es von Vorteil, dass die in axialer Richtung benachbarten zungenähnliche Strukturen in Umfangsrichtung beabstandet zueinander angeordnet sind, so dass die zwischen den benachbarten Rampenschrägen ein Spiel vorhanden ist. Auf dieses Weise können die Rampenschrägen unterschiedliche Steigungen aufweisen, wobei die Steigungen der Rampenschrägen dabei durch die Selbsthemmung des Systems begrenzt ist, um zu garantieren, dass die Kupplung noch durch einen Axialdruck ausgehoben werden kann.

Entsprechend kann die Ausführungsform der Rampenschrägen an den jeweils geforderten bzw. gewünschten Zugbetrieb und/oder Schubbetrieb angepasst werden kann, wodurch die Kupplungseinrichtung flexibel gestaltet und an den jeweiligen Einsatzbereich angepasst werden kann. Somit können die erste translatorische Bewegung und die zweite translatorische Bewegung entweder in die gleiche Richtung weisen oder aber eine Relativverdrehung in eine zweite, der ersten entgegengesetzten Drehrichtung bewirkt gerade keine weitere translatorische Bewegung der Reibpartner.

Ferner kann ein Anpresselement eine axiale Anpresskraft ausüben, die einen Eingriff der Kupplungseinrichtung auf die Reibpartner bewirkt, so dass aufgrund der Schrägverzahnung auf die Reibpartner je nach Drehrichtung Axialkräfte in die eine oder die andere axiale Richtung ausgeübt werden können. Wenn die Kupplungseinrichtung beispielsweise mittels einer Tellerfeder von der einen axialen Seite axial nachgiebig an ein festes Widerlager auf der anderen axialen Seite angedrückt wird, so bedingt die Drehrichtung unterschiedliche Anpresskräfte innerhalb des Lamellenpaketes der Kupplungseinrichtung. Je nach Auslegung des nachgiebigen Anpresselementes lässt sich somit das von der Kupplungseinrichtung maximal übertragbare Moment drehrichtungsabhängig ausgestalten. Für den Anwendungsfall bedeutet dies, dass die Kupplungseinrichtung beim Schub-Zug-Wechsel bei einer anderen Stärke des Lastschlages durchrutscht, als beim Zug-Schub-Wechsel. Wird das Anpresselement auf der einen axialen Seite jedoch extrem steif - d. h. quasi-starr - ausgeführt, so kann die Charakteristik der Kupplungseinrichtung für beide Drehrichtungen nahezu gleich sein.

Eine weitere Ausführungsform besteht darin, dass zur selbsttätigen Verstärkung der Anpresskraft die vorgesehenen Aufnahmeschlitze für die Rampenschrägen der Reibpartner im Außenträger und/oder für die Rampenschrägen der Reibpartner im Innenträger schräg zur Kupplungsachse im Drehsinn der Kupplung verlaufend angeordnet sind, wobei durch diese Anordnung das Restmoment verstärkt wird und eine axiale Berührung der einzelnen Reibpartner im ausgekuppelten Zustand weitgehend vermieden werden muss. Entsprechend ist es von Vorteil wenn zwischen den Reibpartnern umfangsseitig Dämpfungsmittel und/oder Federmittel angeordnet sind.

Die Reibpartner können im Wesentlichen aus einem oder mehreren Blechteilen hergestellt werden, wobei das Stanzen, das ein- oder mehrstufig durchgeführt werden kann besonders vorteilhaft ist, da auf diese Weise das Herstellungsverfahren sehr kostengünstig wird. Alternativ können die zungenähnliche Strukturen der Verbindungselemente der Reibpartner mittels Biegen hergestellt werden, welches ebenfalls ein sehr kostengünstiges Herstellungsverfahren ist, bei dem in vorteilhafter Weise kein Material abgenommen werden muss.

Die Kupplungseinrichtung kann vorzugsweise in Kraftfahrzeugen oder in Nutzfahrzeugen oder in Lastfahrzeugen oder in Krafträdern verwendet werden. Insbesondere ist die Kupplungseinrichtung als Mehrscheibenkupplung ausgebildet. Im Speziellen kann die Kupplungseinrichtung als Doppelkupplung und/oder als Hybridkupplung ausgebildet sein. Die Kupplungseinrichtung kann nass laufend oder trocken ausgeführt sein. Weitere wesentliche Vorteile dieser Kupplungseinrichtung sind ihre materialschonenden Eigenschaften für Motor und Antriebseinheit. Obwohl die erfindungsgemäße Kupplungseinrichtung insbesondere bei Motorrädern besondere Vorteile zeigt, ist der Einsatz auch bei anderen durch Motoren angetriebenen Fahrzeugen möglich.

Weitere Merkmale, Anwendungsmöglichkeiten und Vorteile der Erfindung ergeben sich aus der nachfolgenden Beschreibung des Ausführungsbeispiels der Erfindung, welches in der Zeichnung dargestellt ist. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung nur einen beschreibenden Charakter haben und nicht dazu gedacht sind, die Erfindung in irgendeiner Form einzuschränken.

Die Erfindung wird im Folgenden anhand von Figuren näher erläutert. Dabei zeigen:
Fig. 1 einen perspektivischen Halbschnitt durch eine Kupplungseinrichtung gemäß einer ersten Ausführungsform;
Fig. 2 eine schematisch Schnittansicht durch einen ersten und einen zweiten Reibpartner gemäß einer ersten Ausführungsform;
Fig. 3 eine schematisch Schnittansicht durch einen ersten und einen zweiten Reibpartner gemäß einer zweiten Ausführungsform;
Fig. 4 einen perspektivischen Halbschnitt durch einen innen Träger gemäß einer ersten Ausführungsform; und
Fig. 5 einen perspektivischen Halbschnitt durch einen innen Träger gemäß einer zweiten Ausführungsform.

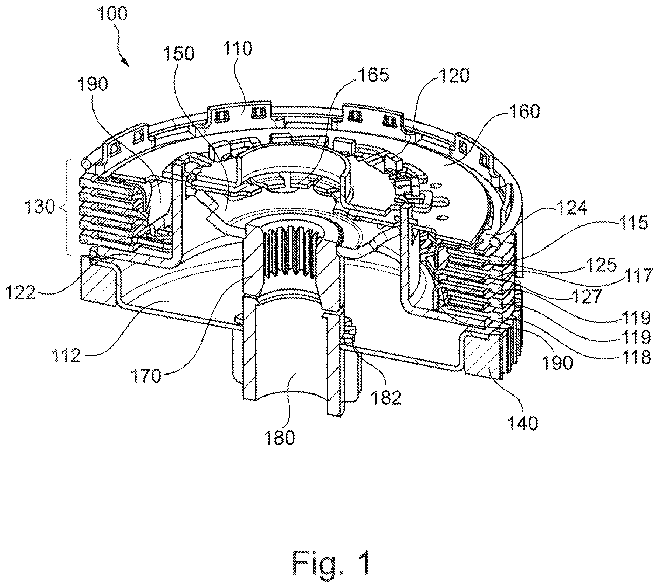

Die in Fig. 1 dargestellte erfindungsgemäße Kupplungseinrichtung 100 ist eine Fahrzeugkupplung, insbesondere in Form einer Motorradkupplung. Die Kupplungseinrichtung 100 umfasst eine Eingangsseite und eine Ausgangsseite, wobei die Eingangsseite und die Ausgangsseite drehbar um eine Drehachse gelagert sind. Die Kupplungseinrichtung 100 weist neben den auch bei konventionellen Kupplungseinrichtungen vorgesehenen Teilen, die hier nicht näher erläutert werden, da sie für die Erklärung der Prinzipien der Erfindung nicht erforderlich sind, einen äußeren Träger 110, einen inneren Träger 120, mehrere Reibpartner 115, 117, 118, 119 die mit dem äußeren Träger 110 verbunden sind, mehrere Reibpartner 124, 125, 127, 128, 129 die mit dem inneren Träger 120 verbunden sind, ein Primärzahnrad 140, ein Übertragungselement 150 , eine Tellerfeder 160 , eine Abtriebsnabe 170, eine Lagerbuchse 180 und mehrere Verbindungselemente 190 auf.

Die Eingangsseite weist ein Primärzahnrad 140 mit einer Verzahnung auf. Über das Primärzahnrad 140 wird ein Drehmoment kommend von einem nicht dargestellten Verbrennungsmotor in die Kupplungseinrichtung 100 eingeleitet. Das Primärzahnrad 140 ist drehmomentenschlüssig direkt angrenzend an den äußeren Träger 110 angeordnet. Ein im Primärzahnrad 140 kämmendes Ritzel sitzt üblicherweise unmittelbar auf einer Kurbelwelle des Antriebsmotors. Die zwischen dem äußeren Träger 110 und dem inneren Träger 120 aufgenommenen Reibpartner 115, 117, 119, 125, 127,128, 129 bilden zusammen ein Lamellenpaket 130 aus. Die Reibpartner 115, 117, 118, 119 weisen eine Außenverzahnung auf, die in die Innenverzahnung des äußeren Trägers 110 eingreift, wodurch die Reibpartner 115, 117, 118, 119 drehmomentenschlüssig mit dem äußeren Träger 110 verbunden sind. Ferner ist ein radial zum äußeren Träger 110 angeordneter innerer Träger 120 vorgesehen, der eine im Bereich des Lamellenpakets 130 vorgesehene Außenverzahnung aufweist. Die Reibpartner 124, 125, 127,128, 129 weisen eine Innenverzahnung auf, die in die Außenverzahnung des inneren Trägers 120 eingreift, wodurch die Reibpartner 124, 125, 127,128, 129 drehmomentenschlüssig mit dem inneren Träger 120 verbunden sind.

Somit steht eine Anzahl der Reibpartner 115, 117, 118, 119 drehmomentenschlüssig mit dem äußeren Träger 110 im Eingriff, wobei die Reibpartner 115, 117, 118, 119 jedoch in axialer Richtung im äußeren Träger 110 verschiebbar sind. In vertikaler Richtung liegt zwischen je zwei benachbarten Reibpartnern 115, 117, 118, 119 ein Reibpartner 124, 125, 127,128, 129, wobei die Reibpartner 124, 125, 127,128, 129 derart drehmomentenschlüssig mit dem innerer Träger 120 verbunden sind, dass sich die Reibpartner 124, 125, 127,128, 129 in eine axiale Richtung gegenüber dem inneren Träger 120 verschieben lassen. Unterhalb des untersten Reibpartners 118 befindet sich ein Bodenabschnitt 122 des inneren Trägers 120. Oberhalb des obersten Reibpartners 124 liegt die Tellerfeder 160, die drehmomentenschlüssig mit dem inneren Träger 120 verbunden ist. Radial innerhalb des inneren Trägers 120 weist die Tellerfeder 160 zwölf radial nach innen weisende Zungen 165 auf. Werden die Zungen 165 axial nach unten bewegt, so wird ein radial außerhalb des inneren Trägers 120 liegender Abschnitt der Tellerfeder 160 angehoben; werden die Zungen 165 angehoben, so wird der außen liegende Abschnitt abgesenkt. Durch Anheben der Zungen 165 können die Reibpartner 115, 117, 118, 119 und die Reibpartner 124, 125, 127,128, 129 zwischen der Tellerfeder 160 und dem Bodenabschnitt 122 axial komprimiert werden, sodass eine Reibungskraft zwischen den Reibpartner 115, 117, 118, 119 und den Reibpartnern 124, 125, 127,128, 129 bzw. der Bodenabschnitt 122 bzw. der Tellerfeder 160 vergrößert wird, um einen Drehmomentschluss zwischen dem äußeren Träger 110 und dem inneren Träger 120 herzustellen.

Das Übertragungselement 150 des inneren Trägers 120 ist drehmomentenschlüssig mit der Abtriebsnabe 170 verbunden, die eine Innenverzahnung aufweist, um das übertragene Drehmoment vom inneren Träger 120 abzugeben. Die Abgabe erfolgt üblicherweise an eine Primärwelle eines Getriebes, beispielsweise eines schaltbaren Mehrgang-Stirnradgetriebes.

Die Lagerbuchse 180 erstreckt sich durch eine koaxiale Aussparung eines Bodenabschnittes 112 des äußeren Trägers 110. Die Ausnehmung im äußeren Träger 110 hat einen kleineren Durchmesser als die Aussparung im Bodenabschnitt 112 und die Lagerbuchse 180 weist dementsprechend eine Schulter auf, die eine axiale Position der Lagerbuchse 180 nach oben begrenzt. An einem sich durch die Aussparung im Bodenabschnitt 112 des äußeren Trägers 110 erstreckenden Abschnitt der Lagerbuchse 180 ist ein radial umlaufender Sicherungsring 182 vorgesehen, um ein Herausfallen der Lagerbuchse 180 nach unten zu verhindern. In Verbindung mit der beschriebenen Schulter ist somit die axiale Position der Lagerbuchse 180 bezüglich des äußeren Trägers 110 in beiden Richtungen fixiert.

Der innere Träger 120 dient der Mitnahme bzw. Abstützung der Reibpartner 124, 125, 127,128, 129. Außerdem ist am inneren Träger 120 die Tellerfeder 160 abgestützt, so dass der innere Träger 120 als Lagerstelle der Tellerfeder 160 und darüber hinaus zur Abstützung der Anpresskraft und Ausrückkraft der Kupplungseinrichtung 100 dient. Des Weiteren wird die Tellerfeder 160 über den inneren Träger 120 in radialer Richtung zentriert. Sowohl die mit dem inneren Träger 120 verbundenen Reibpartner 124, 125, 127,128, 129 als auch die mit dem äußeren Träger 110 verbundenen Reibpartner 115, 117, 118, 119 sind jeweils im dargestellten Ausführungsbeispiel über Verbindungselemente 190 derart miteinander gekoppelt, dass eine Relativverdrehung der gekoppelten Reibpartner 124, 125, 127,128, 129 in einer ersten Drehrichtung eine erste translatorische Bewegung der gekoppelten Reibpartner 115, 117, 118, 119 sowie eine Relativverdrehung der über das zweite Verbindungselemente 190 gekoppelten anderen Reibpartner 124, 125, 127, 128, 129 in einer ersten Drehrichtung eine erste translatorische Bewegung der anderen Reibpartner 115, 117, 118, 119 generiert.

Über ein nicht dargestelltes Anpresselement und die Tellerfeder 160 kann eine axiale Kraft ausgeübt werde, die einen Eingriff der Kupplungseinrichtung 100 über das Lamellenpaket 130 bewirkt. Infolge der Rampenschrägen der Verbindungselemente 190 werden auf die Reibpartner 115, 117, 118, 119, 124, 125,127,128, 129 je nach Drehrichtung Axialkräfte in die eine oder die andere axiale Richtung ausgeübt. Wenn die Kupplungseinrichtung 100 beispielsweise mittels einer Tellerfeder von der einen axialen Seite axial nachgiebig an ein festes Widerlager auf der anderen axialen Seite angedrückt wird, so bedingt die Drehrichtung unterschiedliche Anpresskräfte zwischen den Reibpartner 115, 117, 118, 119, 124, 125,127 der Kupplungseinrichtung 100. Je nach Auslegung des nachgiebigen Anpresselementes und der Tellerfeder 160 lässt sich somit das von der Kupplungseinrichtung 100 maximal übertragbare Moment drehrichtungsabhängig ausgestalten. Für den Anwendungsfall bedeutet dies, dass die Kupplungseinrichtung 100 beim Schub-Zug-Wechsel bei einer anderen Stärke des Lastschlages durchrutscht, als beim Zug-Schub-Wechsel. Wird das Anpresselement auf der einen axialen Seite jedoch extrem steif - d. h. quasi-starr - ausgeführt, so kann die Charakteristik der Kupplungseinrichtung 100 für beide Drehrichtungen nahezu gleich sein.

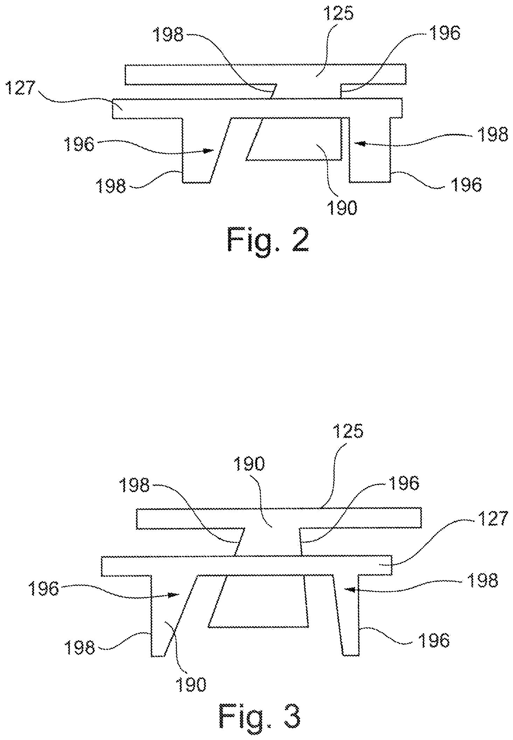

Wie in den Figuren 2 und 3, die jeweils eine schematische Schnittansicht durch zwei mit dem inneren Träger 120 verbundene Reibpartner 125, 127 gemäß einer ersten und zweiten Ausführungsform zeigen, dargestellt, sind die Verbindungselemente 190 derart ausgestaltet, dass sie wenigstens eine sich im Wesentlichen entlang der Drehachse erstreckende zungenähnliche Struktur aufweisen, die wiederum wenigstens einen in Umfangsrichtung parallel zur Drehachse verlaufenden ersten Rand 196 aufweist. Ferner weist die zungenähnliche Struktur einen zweiten Rand 198 auf, wobei der erste Rand 196 und/oder der zweite Rand 198 derart gegenüber der Drehachse geneigt sind, dass die Ränder 196, 198 eine erste Rampenschräge und/oder eine zweite Rampenschräge ausbilden. Auf diese Weise weist jede Seite der Verbindungselemente 190 eine Rampenschräge auf, die wiederum entweder dem Zugbetrieb oder dem Schubbetrieb entspricht, so dass die Anpresskraftreduzierung sowohl im Schub und im Zug als auch nur im Zug zu generieren ist. Unter der Vorraussetzung das die in axialer Richtung benachbarten Reibpartner 115, 117, 118, 119, 124, 125,127, 128, 129 in Umfangsrichtung beabstandet zueinander montiert werden, ist es möglich, dass zwischen den unmittelbar benachbarten Rändern 196, 198 ein Spiel vorhanden ist. Aufgrund dieses Spieles ist es möglich, dass die Rampenschrägen der Rändern 196, 198 je nach Zugbetrieb und Schubbetrieb unterschiedliche Steigungen aufweisen können, wobei die Steigungen Rampenschrägen dabei durch die Selbsthemmung des Systems begrenzt sind, um zu garantieren, dass die Kupplung noch durch einen Axialdruck ausgehoben werden kann.

Verlaufen beispielsweise die jeweiligen Rampenschrägen der Rändern 196, 198, die dem Schubbetrieb zugeordnet sind, wie in Figur 2 dargestellt gerade, wird dadurch die Anpresskraftreduzierung im Schubbetrieb ausgeschaltet. Verlaufen hingegen alle Rampenschrägen der Rändern 196, 198 schräg, wie in Figur 3 dargestellt, wird ein Anpresskraftverstärkungseffekt sowohl im Zugbetrieb als auch im Schubbetrieb erwirkt. Die Steigung der Rampenschrägen kann dabei variabel ausgeführt werden, so dass eine Anpassung der Kupplungseinrichtung 100 an deren jeweilige Nutzung möglich ist. Auf dieses Weise verdreht sich im Schubbetrieb beispielsweise durch das Ausnutzen des Fahrzeugschubmoments die Reibpartner 127 gegenüber der Reibpartner 125 und es kommen nach der Verdrehung um einen Verdrehwinkel jeweils die ersten Rampenschräge eines ersten Verbindungselementes 190 an den zweiten Rampenschrägen eines zweiten Verbindungselementes 190 zur Anlage. Durch das Verdrehen wird über die Rampenschrägen der Verbindungselemente 190 die Tellerfeder 160 mit ihrer degressiven Kennlinie weiter vorgespannt. Aufgrund einer degressiven Federkennlinie wird dadurch die Normalkraft der Tellerfeder 160 auf das gesamte Lamellenpaket 130 gesenkt, wodurch wiederum das übertragbare Schubmoment der Kupplungseinrichtung 100 abgesenkt wird.

Mit anderen Worten zeichnet sich die erfindungsgemäße Kupplungseinrichtung 100 durch die Verknüpfung der Rampenschrägen der Verbindungselemente 190 insbesondere mit der Tellerfeder 160 aus, die eine degressive Charakteristik hat, wobei die Druckplatte der Kupplungseinrichtung 100 nicht abgehoben, sondern das Auflager der Tellerfeder 160 wird verschoben und die Tellerfeder 160 weiter vorgespannt wird. Durch die degressive Kennlinie sinkt dabei jedoch die Vorspannkraft der Tellerfeder 160 auf die Druckplatte und damit auf das Lamellenpaket 130, wodurch die Kupplungseinrichtung 100 leichter durchrutschen und damit das Schubmoment definiert begrenzt werden kann. Zudem wird vorteilhafterweise bei der vorliegenden Kupplungseinrichtung 100 die Druckplatte nicht bewegt, wodurch es keine störende Rückwirkung auf die Fahrerhand am Kupplungshebel gibt.

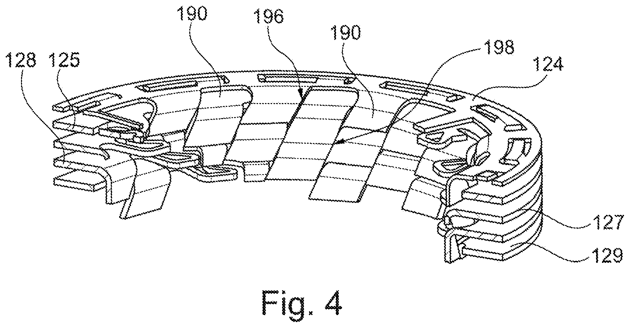

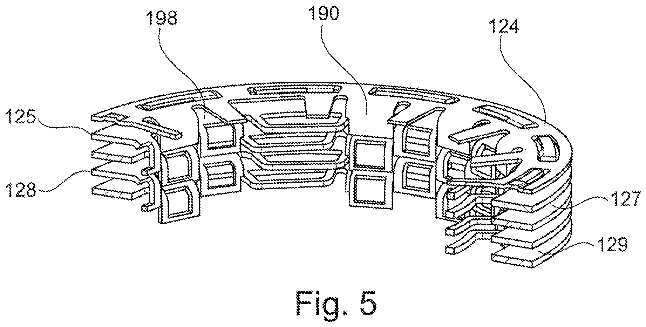

Die Figuren 4 und 5 zeigen jeweils einen perspektivischen Halbschnitt durch den inneren Träger 120 und der daran drehmomentenschlüssig befestigten Reibpartner 124, 125, 127, 128, 129. In Figur 4 sind sowohl die Reibpartner 124, 127, 129 über mehrere schräg verlaufende zungenähnliche Verbindungselemente 190 als auch die Reibpartner 125, 128 über mehrere schräg verlaufende zungenähnliche Verbindungselemente 190 koaxial alternierend miteinander verbunden. Die Schrägführung der Verbindungselemente 190 erlaubt wie oben beschrieben sowohl eine Anpresskraftverstärkung im Zugbetrieb als auch eine Anpresskraftreduzierung im Schubbetrieb, wobei es grundsätzlich möglich ist, dass die Reibpartner 124, 127, 125, 128 des inneren Trägers 120 eine derartige Schrägverbindung aufweisen, so dass das Prinzip der Anpresskraftverstärkung mittels miteinander verbundener Reibpartner 124, 127, 125, 128 zwar umgesetzt wird, aber die Ausgestaltung der restlichen Reibpartner in der Kupplungseinrichtung 100 konventionell erhalten bleiben kann.

Wie in Figur 5 ersichtlich ist, ist aber auch eine Geradverzahnung der Reibpartner 124, 127, 129, 125, 128 denkbar, wobei auch hier koaxial alternierend die Reibpartner 125, 128 und die Reibpartner 124, 127, 129 miteinander verbunden sind. Ein Vorteil der vorliegenden Erfindung besteht darin, dass die Reibpartner 115, 117, 118, 119, 124, 125, 127, 128, 129 mit den Verbindungselementen 190 in der Herstellung einfach, kostengünstig und variabel gestaltet werden können und dadurch die gesamte Kupplungseinrichtung 100 in ihrer Anwendung sehr flexibel ist. Die Steigung der Rampenschrägen wird dabei durch die Selbsthemmung der gesamten Kupplungseinrichtung 100 begrenzt, wodurch garantiert werden kann, dass die Kupplungseinrichtung 100 durch einen Axialdruck ausgehoben werden kann. Entsprechend kann die jeweilige Ausführungsform der Rampenschrägen und somit auch die erste translatorische Bewegung und die zweite translatorische Bewegung an den jeweils geforderten bzw. gewünschten Zugbetrieb und/oder Schubbetrieb angepasst werden, wodurch die Kupplungseinrichtung 100 flexibel gestaltet und für den jeweiligen Einsatzbereich hergestellt werden kann. Dabei ist es möglich, dass die erste translatorische Bewegung und die zweite translatorische Bewegung in die gleiche Richtung weisen oder aber eine Relativverdrehung in einer zweiten, der ersten Drehrichtung entgegengesetzten Drehrichtung gerade keine translatorische Bewegung bewirkt.

Zur selbsttätigen Verstärkung der Anpresskraft sind gerade zur Kupplungsachse im Drehsinn der Kupplungseinrichtung 100 verlaufend Aufnahmeschlitze für die Verbindungselemente 190 der Reibpartner 115, 117, 118, 119 im äußeren Träger 110 angeordnet, wohingegen die Verbindungselemente 190 der Reibpartner 124, 125, 127, 128, 129 des inneren Trägers 120 schräg und/oder gerade angeordnet sein können, wobei bei einer schrägen Anordnung das Restmoment verstärkt wird und eine axiale Berührung der Reibpartner 115, 117, 118, 119, 124, 125, 127, 128, 129 im ausgekuppelten Zustand weitgehend vermieden werden muss. Entsprechend ist es von Vorteil, wenn zwischen den einzelnen Reibpartnern 115, 117, 118, 119, 124, 125, 127, 128, 129 umfangsseitig nicht dargestellte Dämpfungsmittel und/oder Federmittel angeordnet sind.

Jeweils der innerer Träger 120 und/oder der äußere Träger 110 und/oder die Reibpartner 115, 117, 118, 119, 124, 125, 127, 128, 129 selbst sind im Wesentlichen aus einem oder mehreren Blechteilen herstellbar. Wobei das Stanzen des innere Trägers 120 und/oder des äußeren Trägers 110 besonders vorteilhaft ist, da das Herstellungsverfahren, welches ein- oder mehrstufig durchgeführt werden kann, sehr kostengünstig ist. Alternativ können die Verbindungselemente 190 der Reibpartner 115, 117, 118, 119, 124, 125, 127 mittels Biegen hergestellt werden, welches ebenfalls ein sehr kostengünstiges Verfahren ist, bei dem in vorteilhafter Weise kein Material abgenommen werden muss.

Die Kupplungseinrichtung 100 kann vorzugsweise in Kraftfahrzeugen oder in Nutzfahrzeugen oder in Lastfahrzeugen oder in Krafträdern verwendet werden. Insbesondere ist die Kupplungseinrichtung 100 als Mehrscheibenkupplung ausgebildet. Im Speziellen kann die Kupplungseinrichtung 100 als Doppelkupplung und/oder als Hybridkupplung ausgebildet sein. Die Kupplungseinrichtung 100 kann nass laufend oder trocken ausgeführt sein. Weitere wesentliche Vorteile dieser Kupplungseinrichtung 100 sind ihre materialschonenden Eigenschaften für Motor und Antriebseinheit. Obwohl die erfindungsgemäße Kupplungseinrichtung insbesondere bei Motorrädern besondere Vorteile zeigt, ist der Einsatz auch bei anderen durch Motoren angetriebenen Fahrzeugen möglich.

Die Erfindung ist nicht auf die beschriebenen Ausführungsbeispiele beschränkt, sondern umfasst auch gleichwirkende weitere Ausführungsformen. Die Figurenbeschreibung dient lediglich dem Verständnis der Erfindung.

### Bezugszeichenliste

- 100: Kupplungseinrichtung
- 110: äußerer Träger
- 112: Bodenabschnitt des Ersten Trägers
- 125: erster Reibpartner
- 127: dritter Reibpartner
- 118: unterster Reibpartner
- 117: zweiter Reibpartner
- 119: vierter Reibpartner
- 129: fünfter Reibpartner
- 120: innerer Träger
- 122: Bodenabschnitt des Zweiter Trägers
- 124: oberster Reibpartner
- 130: Lamellenpaket
- 140: Primärzahnrad
- 150: Übertragungselement
- 160: Tellerfeder
- 165: Zungen
- 170: Abtriebsnabe
- 180: Lagerbuchse
- 182: Sicherungsring
- 190: Verbindungselement
- 196: erster Rand
- 198: zweiter Rand

## Patentansprüche

1. Kupplungseinrichtung (100) zur Übertragung eines Drehmoments um eine Drehachse zwischen einem inneren Träger (120) einer Abtriebsseite und einem äußeren Träger (110) einer Antriebsseite, umfassend
- zumindest einen drehmomentenschlüssig mit dem inneren Träger (120) verbundenen ersten Reibpartner (125),
- zumindest einen drehmomentenschlüssig mit dem äußeren Träger (110) verbundenen zweiten Reibpartner (117) und
- zumindest einen drehmomentenschlüssig mit dem inneren Träger (120) verbundenen dritten Reibpartner (127),
- wobei die Reibpartner (117, 125, 127) durch eine Anpresskraft derart in Reibeingriff bringbar sind, um das Drehmoment zwischen der Antriebsseite und der Abtriebsseite zu übertragen,
**dadurch gekennzeichnet, dass**
zumindest zwei Reibpartner (125, 127) derart über wenigstens ein erstes Verbindungselement (190) miteinander verbunden sind, dass eine erste Verdrehung der zwei gekoppelten Reibpartner (125, 127) in einer ersten Drehrichtung eine erste translatorische Bewegung der gekoppelten Reibpartner in Richtung der Drehachse generiert.

2. Kupplungseinrichtung (100) nach Anspruch 1, **dadurch gekennzeichnet, dass** der zweite Reibpartner (117) zwischen dem ersten Reibpartner (125) und dem dritten Reibpartner (127) in einer axialen Richtung verschiebbar angeordnet ist.

3. Kupplungseinrichtung (100) nach Anspruch 1 oder 2, **dadurch gekennzeichnet, dass** der dritte Reibpartner (127) über das wenigstens eine erste Verbindungselement (190) mit dem ersten Reibpartner (125) gekoppelt ist, wobei eine Verdrehung des dritten Reibpartners (127) und des ersten Reibpartners (125) in die erste Drehrichtung die erste translatorische Bewegung des dritten Reibpartners (127) und des ersten Reibpartners (125) in Richtung der Drehachse generiert.

4. Kupplungseinrichtung (100) nach einem der Ansprüche 1 bis 3, **dadurch gekennzeichnet, dass** ein vierter Reibpartner (119) zwischen dem dritten Reibpartner (127) und einem fünften Reibpartner (129) in der axialen Richtung verschiebbar angeordnet ist.

5. Kupplungseinrichtung (100) nach Anspruch 4, **dadurch gekennzeichnet, dass** der vierte Reibpartner (119) über wenigstens ein zweites Verbindungselement (190) derart mit dem zweiten Reibpartner (117) gekoppelt ist, dass eine Verdrehung des vierten Reibpartners (119) und des zweiten Reibpartners (117) in die erste Drehrichtung eine erste translatorische Bewegung des vierten Reibpartners (119) und des zweiten Reibpartners (117) generiert.

6. Kupplungseinrichtung (100) nach Anspruch 4 oder 5, **dadurch gekennzeichnet, dass** zumindest der erste Reibpartner (125) und der dritte Reibpartner (127) über das erste Verbindungselement (190) und/oder der vierte Reibpartner (119) und der zweite Reibpartner (117) über das zweite Verbindungselement (190) derart aneinander gekoppelt sind, dass eine Verdrehung in einer zweiten, der ersten Drehrichtung entgegengesetzten Drehrichtung eine zweite translatorische Bewegung des ersten Reibpartners (125) und des dritten Reibpartners (127) und/oder des vierten Reibpartners (119) und des zweiten Reibpartners (117) generiert.

7. Kupplungseinrichtung (100) nach Anspruch 6, **dadurch gekennzeichnet, dass** die erste translatorische Bewegung und die zweite translatorische Bewegung in die gleiche Richtung weisen.

8. Kupplungseinrichtung (100) nach einem der Ansprüche 1 bis 5, **dadurch gekennzeichnet, dass** das wenigstens eine erste Verbindungselement (190) derart zwischen dem ersten Reibpartner (125) und dem dritten Reibpartner (127) angeordnet ist, wobei das erste Verbindungselement (190) eine zweite Verdrehung in einer zweiten, der ersten entgegengesetzten Drehrichtung eine translatorische Bewegung des ersten Reibpartners (125) und des dritten Reibpartners (127) verhindert.

9. Kupplungseinrichtung (100) nach Anspruch 5, **dadurch gekennzeichnet, dass** das wenigstens eine zweite Verbindungselement (190) derart zwischen dem vierten Reibpartner (119) und dem zweiten Reibpartner (117) angeordnet ist, dass das zweite Verbindungselement (190) eine zweite Verdrehung in einer zweiten, der ersten entgegengesetzten Drehrichtung eine translatorische Bewegung des zweiten Reibpartners (117) und des vierten Reibpartners (119) verhindert.

10. Kupplungseinrichtung (100) nach einem der Ansprüche 1 bis 9, **dadurch gekennzeichnet, dass** das erste Verbindungselement (190) eine sich im Wesentlichen entlang der Drehachse erstreckende zungenähnlichen Struktur aufweist.

11. Kupplungseinrichtung (100) nach Anspruch 10, **dadurch gekennzeichnet, dass** die zungenähnliche Struktur wenigstens einen in Umfangsrichtung parallel zur Drehachse verlaufenden ersten Rand (196) aufweist.

12. Kupplungseinrichtung (100) nach Anspruch 11, **dadurch gekennzeichnet, dass** die zungenähnliche Struktur einen zweiten Rand (198) aufweist, wobei der erste Rand (196) und der zweite Rand (198) derart gegenüber der Drehachse geneigt sind, dass die Ränder (196, 198) eine erste Rampenschräge und/oder eine zweite Rampenschräge ausbilden.

13. Kupplungseinrichtung (100) nach Anspruch 12, **dadurch gekennzeichnet, dass** die in axialer Richtung benachbarten zungenähnliche Strukturen der mit dem inneren Träger (120) verbundenen Reibpartner (125, 127, 129) in Umfangsrichtung beabstandet zueinander angeordnet sind.

14. Kupplungseinrichtung nach einem der Ansprüche 1 bis 14, **dadurch gekennzeichnet, dass** zwischen den Reibpartnern (117, 119, 125, 127, 129) umfangsseitig Dämpfungsmittel und/oder Federmittel angeordnet sind.

## Claims

1. Clutch device (100) for transmitting a torque about a rotational axis between an inner carrier (120) of an output side and an outer carrier (110) of a drive side, comprising
- at least one first friction partner (125) which is connected to the inner carrier (120) in a torque-locking manner,
- at least one second friction partner (117) which is connected to the outer carrier (110) in a torque-locking manner, and
- at least one third friction partner (127) which is connected to the inner carrier (120) in a torque-locking manner,
- it being possible for the friction partners (117, 125, 127) to be brought into frictional engagement by way of a pressing force in such a way as to transmit the torque between the drive side and the output side,
**characterized in that**
at least two friction partners (125, 127) are connected to one another via at least one first connecting element (190) in such a way that a first rotation of the two coupled friction partners (125, 127) in a first rotational direction generates a first translational movement of the coupled friction partners in the direction of the rotational axis.

2. Clutch device (100) according to Claim 1, **characterized in that** the second friction partner (117) is arranged such that it can be displaced in an axial direction between the first friction partner (125) and the third friction partner (127).

3. Clutch device (100) according to Claim 1 or 2, **characterized in that** the third friction partner (127) is connected to the first friction partner (125) via the at least one first connecting element (190), a rotation of the third friction partner (127) and the first friction partner (125) in the first rotational direction generating the first translational movement of the third friction partner (127) and the first friction partner (125) in the direction of the rotational axis.

4. Clutch device (100) according to one of Claims 1 to 3, **characterized in that** a fourth friction partner (119) is arranged such that it can be displaced in the axial direction between the third friction partner (127) and a fifth friction partner (129).

5. Clutch device (100) according to Claim 4, **characterized in that** the fourth friction partner (119) is coupled to the second friction partner (117) via at least one connecting element (190) in such a way that a rotation of the fourth friction partner (119) and the second friction partner (117) in the first rotational direction generates a first translational movement of the fourth friction partner (119) and the second friction partner (117).

6. Clutch device (100) according to Claim 4 or 5, **characterized in that** at least the first friction partner (125) and the third friction partner (127) are coupled to one another via the first connecting element (190) and/or the fourth friction partner (119) and the second friction partner (117) are coupled to one another via the second connecting element (190) in such a way that a rotation in a second rotational direction which is opposite to the first rotational direction generates a second translational movement of the first friction partner (125) and the third friction partner (127) and/or of the fourth friction partner (119) and the second friction partner (117).

7. Clutch device (100) according to Claim 6, **characterized in that** the first translational movement and the second translational movement point in the same direction.

8. Clutch device (100) according to one of Claims 1 to 5, **characterized in that** the at least one first connecting element (190) is arranged in such a way between the first friction partner (125) and the third friction partner (127), the first connecting element (190) preventing a second rotation in a second rotational direction which is opposed to the first rotational direction a translational movement of the first friction partner (125) and the third friction partner (127).

9. Clutch device (100) according to Claim 5, **characterized in that** the at least one second connecting element (190) is arranged between the fourth friction partner (119) and the second friction partner (117) in such a way that the second connecting element (190) prevents a second rotation in a second rotational direction which is opposite to the first rotational direction a translational movement of the second friction partner (117) and the fourth friction partner (119).

10. Clutch device (100) according to one of Claims 1 to 9, **characterized in that** the first connecting element (190) has a tongue-like structure which extends substantially along the rotational axis.

11. Clutch device (100) according to Claim 10, **characterized in that** the tongue-like structure has at least one first edge (196) which runs in the circumferential direction parallel to the rotational axis.

12. Clutch device (100) according to Claim 11, **characterized in that** the tongue-like structure has a second edge (198), the first edge (196) and the second edge (198) being inclined with respect to the rotational axis in such a way that the edges (196, 198) form a first ramp slope and/or a second ramp slope.

13. Clutch device (100) according to Claim 12, **characterized in that** the tongue-like structures, adjacent in the axial direction, of the friction partners (125, 127, 129) which are connected to the inner carrier (120) are arranged spaced apart from one another in the circumferential direction.

14. Clutch device according to one of Claims 1 to 14, **characterized in that** the damping means and/or spring means are arranged on the circumferential side between the friction partners (117, 119, 125, 127, 129).

## Revendications

1. Dispositif d'embrayage (100) pour le transfert d'un couple autour d'un axe de rotation entre un support intérieur (120) d'un côté de prise de force et un support extérieur (110) d'un côté d'entraînement, comprenant :
- au moins un premier partenaire de friction (125) connecté par engagement de couple au support intérieur (120),
- au moins un deuxième partenaire de friction (117) connecté par engagement de couple au support extérieur (110) et
- au moins un troisième partenaire de friction (127) connecté par engagement de couple au support intérieur (120),
- les partenaires de friction (117, 125, 127) pouvant être amenés en engagement, de friction par une force de pressage de manière à transmettre le couple entre le côté d'entraînement et le côté de prise de force,
**caractérisé en ce**
**qu'**au moins deux partenaires de friction (125, 127) sont connectés l'un à l'autre par le biais d'au moins un premier élément de connexion (190) de telle sorte qu'une première rotation des deux partenaires de friction accouplés (125, 127) dans un premier sens de rotation génère un premier déplacement en translation des partenaires de friction accouplés dans la direction de l'axe de rotation.

2. Dispositif d'embrayage (100) selon la revendication 1, **caractérisé en ce que** le deuxième partenaire de friction (117) est disposé de manière déplaçable dans une direction axiale entre le premier partenaire de friction (125) et le troisième partenaire de friction (127).

3. Dispositif d'embrayage (100) selon la revendication 1 ou 2, **caractérisé en ce que** le troisième partenaire de friction (127) est accouplé par le biais de l'au moins un premier élément de connexion (190) au premier partenaire de friction (125), une rotation du troisième partenaire de friction (127) et du premier partenaire de friction (125) dans le premier sens de rotation générant le premier mouvement en translation du troisième partenaire de friction (127) et du premier partenaire de friction (125) dans la direction de l'axe de rotation.

4. Dispositif d'embrayage (100) selon l'une quelconque des revendications 1 à 3, **caractérisé en ce qu'**un quatrième partenaire de friction (119) est disposé de manière déplaçable dans la direction axiale entre le troisième partenaire de friction (127) et un cinquième partenaire de friction (129).

5. Dispositif d'embrayage (100) selon la revendication 4, **caractérisé en ce que** le quatrième partenaire de friction (119) est accouplé par le biais d'au moins un deuxième élément de connexion (190) au deuxième partenaire de friction (117) de telle sorte qu'une rotation du quatrième partenaire de friction (119) et du deuxième partenaire de friction (117) dans le premier sens de rotation génère un premier mouvement en translation du quatrième partenaire de friction (119) et du deuxième partenaire de friction (117).

6. Dispositif d'embrayage (100) selon la revendication 4 ou 5, **caractérisé en ce qu'**au moins le premier partenaire de friction (125) et le troisième partenaire de friction (127) sont accouplés l'un à l'autre par le biais du premier élément de connexion (190) et/ou le quatrième partenaire de friction (119) et le deuxième partenaire de friction (117) sont accouplés l'un à l'autre par le biais du deuxième élément de connexion (190), de telle sorte qu'une rotation dans un deuxième sens de rotation opposé au premier sens de rotation génère un deuxième mouvement en translation du premier partenaire de friction (125) et du troisième partenaire de friction (127) et/ou du quatrième partenaire de friction (119) et du deuxième partenaire de friction (117).

7. Dispositif d'embrayage (100) selon la revendication 6, **caractérisé en ce que** le premier mouvement en translation et le deuxième mouvement en translation sont orientés dans la même direction.

8. Dispositif d'embrayage (100) selon l'une quelconque des revendications 1 à 5, **caractérisé en ce que** l'au moins un élément de connexion (190) est disposé entre le premier partenaire de friction (125) et le troisième partenaire de friction (127) de telle sorte, le premier élément de connexion (190) empêchant une deuxième rotation dans un deuxième sens de rotation opposé au premier un mouvement de translation du premier partenaire de friction (125) et du troisième partenaire de friction (127).

9. Dispositif d'embrayage (100) selon la revendication 5, **caractérisé en ce que** l'au moins un deuxième élément de connexion (190) est disposé entre le quatrième partenaire de friction (119) et le deuxième partenaire de friction (117) de telle sorte que le deuxième élément de connexion (190) empêche une deuxième rotation dans un deuxième sens de rotation opposé au premier un mouvement en translation du deuxième partenaire de friction (117) et du quatrième partenaire de friction (119).

10. Dispositif d'embrayage (100) selon l'une quelconque des revendications 1 à 9, **caractérisé en ce que** le premier élément de connexion (190) présente une structure similaire à une langue s'étendant essentiellement le long de l'axe de rotation.

11. Dispositif d'embrayage (100) selon la revendication 10, **caractérisé en ce que** la structure similaire à une langue présente au moins un premier bord (196) s'étendant parallèlement à l'axe de rotation dans la direction périphérique.

12. Dispositif d'embrayage (100) selon la revendication 11, **caractérisé en ce que** la structure similaire à une langue présente un deuxième bord (198), le premier bord (196) et le deuxième bord (198) étant inclinés par rapport à l'axe de rotation de telle sorte que les bords (196, 198) constituent un premier biseau de rampe et/ou un deuxième biseau de rampe.

13. Dispositif d'embrayage (100) selon la revendication 12, **caractérisé en ce que** les structures similaires à une langue, adjacentes dans la direction axiale des partenaires de friction (125, 127, 129) connectés au support intérieur (120), sont disposées de manière espacée les unes des autres dans la direction périphérique.

14. Dispositif d'embrayage selon l'une quelconque des revendications 1 à 14, **caractérisé en ce qu'**entre les partenaires de friction (117, 119, 125, 127, 129) sont disposés du côté périphérique des moyens d'amortissement et/ou des moyens de ressort.
